# EUROPÄISCHE PATENTANMELDUNG

(11) **EP 3 885 568 A1**
(43) Veröffentlichungstag der Anmeldung: **29.09.2021**
(21) Anmeldenummer: 20165897.8
(22) Anmeldetag: 26.03.2020
(51) Int. Cl.: F02M 21/02, B63H 21/38, B63J 2/00, B63J 2/14, F02M 21/06, F02M 31/18

(54) **VERFAHREN UND SYSTEM ZUR AUFHEIZUNG VON LNG-FLÜSSIGGAS ZUR VERSORGUNG EINER ANTRIEBSMASCHINE EINES SEEFAHRZEUGS MIT BRENNSTOFF**

(71) Anmelder: Marine Service GmbH, 20457 Hamburg (DE)
(72) Erfinder: Schmidt-Lüssmann, Jochen, 21244 Buchholz (DE)
(74) Vertreter: Meyer, Ludgerus

(57) **Zusammenfassung**

Die Erfindung betrifft ein Verfahren und ein System zur Aufheizung von LNG-Flüssiggas zur Versorgung einer Antriebsmaschine (2) eines Seefahrzeugs mit Brennstoff, bei dem das Flüssiggas aus einem LNG-Tank (1) über einen ersten Wärmetauscher (3) und über einen ersten Zwischenkreislauf (6) in thermischer Verbindung mit einem zweiten Wärmetauscher (4) steht, der mit einem Kaltwasserkreislauf (14) einer Klimaanlage (5) verbunden ist, aus dem wenigstens zeitweise thermische Energie aus wärmeabgebenden Einrichtungen des Seefahrzeuges über den zweiten Wärmetauscher (4), den ersten Zwischenkreislauf (6) und den ersten Wärmetauscher (3) an das aufzuheizende LNG übertragen wird. Erfindungsgemäß wird das Flüssiggas zur weiteren Aufheizung ferner über einen dritten Wärmetauscher (7) geführt, der über einen zweiten Zwischenkreislauf (8) in thermischer Verbindung mit einem vierten Wärmetauscher (9) steht, der mit einem Kühlwasserkreislauf (10) der Antriebsmaschine (2) verbunden ist, aus dem wenigstens zeitweise thermische Energie über den vierten Wärmetauscher (9), den zweiten Zwischenkreislauf (8) und den dritten Wärmetauscher (7) an das aufzuheizende LNG übertragen wird. (Figur)

## Beschreibung

Die Erfindung betrifft ein Verfahren und ein System zur Aufheizung von LNG-Flüssiggas zur Versorgung einer Antriebsmaschine eines Seefahrzeugs mit Brennstoff nach dem Oberbegriff der Ansprüche 1 und 5.

In zunehmendem Maß werden heute Antriebsmaschinen von Seeschiffen mit LNG-Flüssiggas betrieben, das es ermöglicht, die Umweltbelastung durch Abgase des Seeschiffes im Vergleich zu einer Verbrennung von Schiffsdiesel erheblich zu verringern.

Zur Nutzung des LNG-Flüssiggases, das auf dem Schiff bei einer Temperatur von etwa -160°C in einem Tieftemperaturtank gelagert wird, ist das Flüssiggas auf eine Temperatur von etwa Umgebungstemperatur aufzuheizen. Hierzu kann Seewasser verwendet werden, wenn es eine ausreichende Temperatur besitzt. Bekannt ist aber auch, Wärmeenergie aus dem Kaltwasserkreislauf einer Klimaanlage zu entnehmen, wodurch neben der Aufheizung des Flüssiggases eine Kühlung der Wohn- und Arbeitsräume auf dem Schiff erreichbar ist.

Aus der EP 1 966 041 B1 ist ein Verfahren bekannt, bei dem das Kraftstoffzuführsystem zur Antriebsmaschine über einen ersten Wärmetauscher geführt wird, der in thermischer Verbindung zu einem Zwischenkreislauf steht, dem über einen zweiten Wärmetauscher Wärme aus einer Klimaanlage zugeführt wird und der zusätzlich über einen dritten Wärmetauscher Wärme aus Meerwasser empfängt.

Die dadurch erreichbare Aufheizenergie hängt stark von der von der Klimaanlage abgebbaren Wärmeenergie ab. Bei einer Fahrt des Schiffes in kalten Regionen steht nur eine geringe Menge an Wärmeenergie aus der Klimaanlage zur Verfügung. Gleichzeitig weist das Meerwasser auch nur eine niedrige Temperatur auf, so dass für diesen Fall eine unzureichende Menge an Wärmeenergie zur Aufheizung des Flüssiggases vorhanden sein kann.

Der Erfindung liegt daher die Aufgabe zugrunde, ein Verfahren und ein System zur Aufheizung von LNG-Flüssiggas zur Versorgung einer Antriebsmaschine eines Seefahrzeugs mit Brennstoff anzugeben, mit dem eine effiziente Aufheizung des Flüssiggases erreichbar ist, ohne dass Wärme aus Meerwasser zu entnehmen ist.

Diese Aufgabe wird durch das im Anspruch 1 angegebene Verfahren und das im Anspruch 5 angegebene System gelöst. Weitergehende Merkmale der Erfindung sind in den jeweiligen Unteransprüchen angegeben.

Das erfindungsgemäße Verfahren geht aus von einem Verfahren zur Aufheizung von LNG-Flüssiggas zur Versorgung einer Antriebsmaschine eines Seefahrzeugs mit Brennstoff, bei dem das Flüssiggas aus einem LNG-Tank über einen ersten Wärmetauscher geführt wird, der über einen ersten Zwischenkreislauf in thermischer Verbindung mit einem zweiten Wärmetauscher steht, der mit einem Kaltwasserkreislauf einer Klimaanlage verbunden ist, aus dem wenigstens zeitweise thermische Energie aus wärmeabgebenden Einrichtungen des Seefahrzeuges über den zweiten Wärmetauscher, den ersten Zwischenkreislauf und den ersten Wärmetauscher an das aufzuheizende LNG übertragen werden kann.

Erfindungsgemäß wird das Flüssiggas zur weiteren Aufheizung ferner über einen dritten Wärmetauscher geführt, der über einen zweiten Zwischenkreislauf in thermischer Verbindung mit einem vierten Wärmetauscher steht, der mit einem Kühlwasserkreislauf der Antriebsmaschine verbunden ist, aus dem ebenfalls wenigstens zeitweise thermische Energie über den vierten Wärmetauscher, den zweiten Zwischenkreislauf und den dritten Wärmetauscher an das aufzuheizende LNG übertragen werden kann.

Mit dieser Erfindung wird zur Aufheizung des Flüssiggases einerseits Wärmeenergie aus einer Klimaanlage und andererseits Wärme aus einem Kühlwasserkreislauf der Antriebsmaschine abgeleitet. Da der Kaltwasserkreislauf der Klimaanlage eine relativ geringe Temperatur von ca. 6 - 12°C aufweist, wird dessen Wärmeenergie in einer ersten Heizstufe zur ersten Aufheizung bzw. Verdampfung des Flüssiggases verwendet. Zur weiteren Aufheizung des Flüssiggases wird in einer zweiten Heizstufe Wärmeenergie einer höheren Temperatur aus dem Kühlwasserkreislauf der Antriebsmaschine abgeleitet. Die Einbringung der Wärmeenergie in das Flüssiggas erfolgt jeweils über einen Zwischenkreislauf mit zwei Wärmetauschern. Hierdurch wird vermieden, dass im Havariefall Flüssiggas in den Kühlwasserkreislauf der Antriebsmaschine einerseits oder in den Kaltwasserkreislauf der Klimaanlage andererseits eindringen kann.

Wenn in den Zwischenkreisläufen eine Glycol/Wasser-Mischung verwendet wird, ergibt sich der Vorteil, dass auch bei Temperaturen unter dem Wasser-Gefrierpunkt dieses Umlaufmedium flüssig bleibt.

Da der Kältebedarf einer Klimaanlage auf einem Schiff stark von äußeren Einflüssen abhängt, insbesondere der Umgebungstemperatur, der Sonneneinstrahlung, den Windverhältnissen und der Belegung bei einem Passagierschiff, steht die zur Verfügung stehende Wärmeenergie aus der Klimaanlage nicht konstant zur Verfügung, während der Wärmebedarf zur Aufheizung des Flüssiggases von dem jeweiligen Leistungsbedarf der Antriebsmaschine abhängt. Um dem Flüssiggas zur Verdampfung und Erwärmung gleichwohl immer ausreichend Wärmeenergie zur Verfügung zu stellen, sieht die Erfindung vorzugsweise vor, einen fünften Wärmetauscher zu verwenden, der eine variable thermische Kopplung zwischen Kühlwasserkreislauf und Kaltwasserkreislauf ermöglicht. Dazu kann bei Bedarf ein Teil der Wärmeenergie des Kühlwasserkreislaufs in den Kaltwasserkreislauf eingekoppelt werden, um so Wärmeenergie des Kühlwasserkreislaufs auch über den ersten Zwischenkreislauf an das Flüssiggas übertragen zu können. Zur noch weiteren Wärmeerzeugung kann in den Kühlwasserkreislauf ein Dampfheizer eingeschaltet werden.

Für den Fall, dass der Wärmebedarf für die Antriebsmaschine gering ist, können zur Aufrechterhaltung der Kühlfunktion der Klimaanlage zusätzlich Kältemaschinen verwendet werden, wobei die Wärmeübertragung aus dem Kühlwasserkreislauf in den Kaltwasserkreislauf dabei durch geeignete Ventilsteuerung unterbunden wird.

Die Erfindung wird nachstehend durch ein Ausführungsbeispiel unter Bezug auf eine Zeichnung näher erläutert.

Bei dem System der Erfindung wird zum Betreiben der Antriebsmaschine verdampftes Flüssiggas verwendet, das aus einem Tieftemperaturtank 1 an Bord des Schiffes bezogen wird und durch Wärme aus schiffseigenen Einrichtungen verdampft und dabei auf eine Temperatur von etwa 25°C aufgeheizt wird, die einen effizienten Betrieb der Antriebsmaschine 2 ermöglicht.

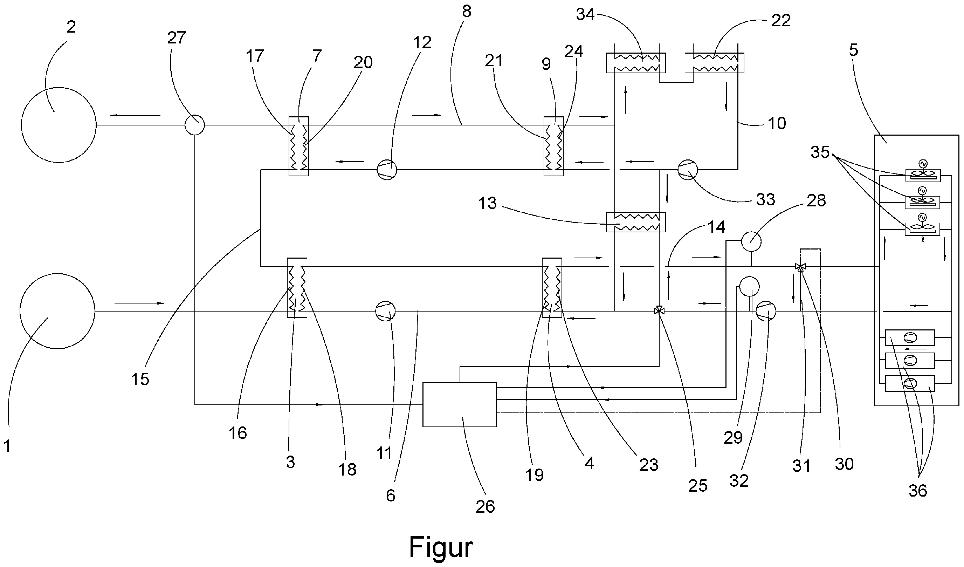

Das in der Zeichnung dargestellte System enthält einen LNG Tank 1, in dem Flüssiggas bei einer Temperatur von etwa -162° C auf dem Schiff gelagert ist. Über eine Fluidleitung 15 wird das zunächst flüssige Gas in einem ersten Wärmetauscher 3 auf etwas unter 0°C verdampft und über einen dritten Wärmetauscher 7 weiter bis auf eine Nutztemperatur von etwa 25°C aufgeheizt.

Das zu verdampfende Flüssiggas wird dazu über die Primärseite 16 des ersten Wärmetauschers 3 geführt, dessen Sekundärseite 18 sich in einem ersten Zwischenkreislauf 6 befindet, der außerdem über die Primärseite 19 eines zweiten Wärmetauschers 4 verläuft, durch dessen Sekundärseite 23 ein Kaltwasserkreislauf 14 geführt ist, aus dem Wärmeenergie entnehmbar ist. Diese Wärmeenergie stammt aus einer Klimaanlage 5 des Schiffes. Dabei handelt es sich um eine zentrale Luft/Wasser-Anlage. Diese besteht aus einer Reihe von Klimageräten 35, die die Wohnräume des Schiffes kühlen, und mehreren Kältemaschinen 36, die diese mit kaltem Wasser versorgen können. Die Klimageräte 35 sind parallel geschaltet mit den Kältemaschinen 36, die automatisch die Kälteversorgung übernehmen, wenn aus der LNG-Verdampfung keine ausreichende Kälte zur Verfügung gestellt werden kann. Der zweite Wärmetauscher 4 gibt Wärme aus dem Kaltwasserkreislauf 14 an den ersten Zwischenkreislauf 6 ab, wobei das Kaltwasser im Kaltwasserkreislauf 14 gekühlt wird und damit der Klimatisierung des Schiffes in der Klimaanlage 5 dient. Die in den ersten Zwischenkreislauf 6 überführte Wärmeenergie heizt über den ersten Wärmetauscher 3 das Flüssiggas soweit auf, dass es verdampft und auf eine höhere Temperatur gebracht wird.

Das verdampfte Flüssiggas wird über die Fluidleitung 15 weiter an die Primärseite17 des dritten Wärmetauschers 7 geführt, dessen Sekundärseite 20 in einen zweiten Zwischenkreislauf 8 eingebunden ist, in dem sich auch die Primärseite 21 eines vierten Wärmetauschers 9 befindet. Über dessen Sekundärseite 24 steht der vierte Wärmetauscher 9 in thermischer Verbindung zu einem Kühlwasserkreislauf 10, der über einen Motor-Wärmetauscher 34 in thermischer Verbindung mit dem Kühlwasser der Antriebsmaschine 2 steht. Auf diesem Wege kann die Wärmeenergie des mit einer Förderpumpe 33 versehenen Kühlwasserkreislaufs 10 über den zweiten Zwischenkreislauf 8 an das bereits verdampfte Flüssiggas übertragen werden und dessen Temperatur soweit erhöhen, dass das Gas in die Antriebsmaschine 2 eingeführt werden kann.

Mit dieser grundsätzlichen Ausbildung eines Erwärmungssystems lässt sich auf einem Schiff einerseits eine Verdampfung und Erwärmung von Flüssiggas zur Bereitstellung von Brenngas für die Antriebsmaschine erreichen und andererseits eine Kühlung für die Klimatisierung von Wohn- und Arbeitsräumen des Schiffes und ferner die Kühlung der Antriebsmaschine des Schiffes erreichen.

Die Bezeichnung Antriebsmaschine umfasst auch alle weiteren Verbraucher eines Schiffes, die mit verdampftem Flüssiggas betrieben werden. Die Bezeichnung Klimaanlage umfasst auch solche Einrichtungen, die ebenfalls Wärme erzeugen, wie Kühlräume, Küchen und vergleichbare Einrichtungen auf einem Schiff.

In den Zwischenkreisläufen 6 und 8 wird eine Mischung aus Glykol und Wasser verwendet, die in einem weiten Temperaturbereich flüssig bleibt. Über Umwälzpumpen 11 und 12 wird die Mischung im Kreislauf umgepumpt. Über die Wärmetauscher 3, 4 und 7, 9 wird eine sichere Flüssigkeitstrennung des Flüssiggases gegenüber dem Kaltwasserkreislauf 14 der Klimaanlage 5 und dem Kühlwasserkreislauf 10 der Antriebsmaschine 2 herbeigeführt.

Für einige Betriebszustände ist das System an bestimmte Bedarfszustände und äußere Faktoren anzupassen. Für den Fall, dass das Schiff sich in einem Gewässer befindet, in dem die Lufttemperatur so niedrig ist, dass die Klimaanlage keine Wärmeenergie abgeben und somit keine ausreichende Wärmeenergie-Übertragung über den ersten Zwischenkreislauf 6 zur Verdampfung des Flüssiggases bereitgestellt werden kann, ist vorgesehen, dass eine Teilmenge der Wärmeenergie des Kühlwasserkreislaufs 10 über einen fünften Wärmetauscher 13, der den Kühlwasserkreislauf 10 und den Kaltwasserkreislauf 14 thermisch verbindet, an den Kaltwasserkreislauf 14 der Klimaanlage abgegeben werden kann, und somit über den ersten Zwischenkreislauf 6 die Verdampfung des Flüssiggases im ersten Wärmetauscher 3 aufrechterhalten werden kann. Die Steuerung der Menge an Wärmeenergie, die an den Kaltwasserkreislauf 14 übertragen wird, erfolgt über ein 3-Wegeventil 25, das den Anteil des Kaltwasserkreislaufs, der über den fünften Wärmetauscher fließt, nach Bedarf einstellt. Dieser Betriebszustand kann auch dann erforderlich sein, wenn ein erhöhter Bedarf an Wärmeenergie zur Verdampfung des Flüssiggases besteht, z.B. bei hoher Last der Antriebsmaschine oder Einschaltung weiterer Gasverbraucher.

Wenn umgekehrt der Bedarf an Wärmeenergie für die Antriebsmaschine 2 gering ist, aber den Bedarf an Klimatisierung sehr hoch ist, z.B. bei Stillstandzeiten der Antriebsmaschine in Seegebieten mit hoher Umgebungstemperatur, ist sicherzustellen, dass die Klimaanlage 5 auch unter diesen Umständen ausreichende Kühlung gewährleistet, auch wenn nur wenig Flüssiggas zu verdampfen ist. Dazu werden optional Kältemaschinen 36 verwendet, die eine Abkühlung des Kaltwasserkreislaufs der Klimageräte unabhängig von Kreislauf 14 bewirken. Zum Antrieb der Kältemaschinen 36 kann auch verdampftes Flüssiggas verwendet werden, wodurch sich der Bedarf an Wärmeenergie zur Verdampfung des Flüssiggases wiederum erhöhen kann. Bei Einsatz der Kältemaschinen 36 kann über ein 3-Wegeventil 30 der Weg des Kaltwasserkreislaufes 14 über den zweiten Wärmetauscher 4 abgesperrt werden.

Der Brennstoffmassestrom zur Antriebsmaschine lässt sich über einen Durchflussmesser 27 vor der Antriebsmaschine 2 ermitteln. Der Kaltwasserkreislauf 14 enthält in der Zu- und Ablaufstrecke jeweils einen Temperatursensor 28 bzw. 29. Die Sensoren 28, 29 und der Durchflussmesser 27 übertragen ihre ermittelten Daten an eine Regeleinrichtung 26, die anhand von vorgegebenen Parametern die optimalen Einstellungen der 3-Wegeventile 25 und 30 feststellt und einstellt. Anstelle der Ermittlung des Massestroms kann auch die Leistungsaufnahme der Antriebsmaschine ausgewertet werden oder es können andere repräsentative Daten zur Feststellung des Brennstoffbedarfs herangezogen werden.

Der Temperatursensor 29 stellt fest, ob ausreichende Wärme zur Aufheizung des Flüssiggases bereitgestellt werden kann. Wenn nicht genügend Wärmeenergie aus der Klimaanlage 5 vorhanden ist, wird das 3-Wegeventil 25 geöffnet, so dass Wärmeenergie aus dem Kühlwasserkreislauf 10 zum zweiten Wärmetauscher 4 gelangen kann. Dann wird die durch das 3-Wegeventil 30 einstellbare Rücklaufstrecke 31 gesperrt.

Ist ausreichend Wärmeenergie aus der Klimaanlage 5 vorhanden, werden beide 3-Wegeventile 25 und 30 auf Durchlauf geschaltet.

Wenn die am Temperatursensor 28 gemessene Rücklauftemperatur der Klimaanlage hoch ist, und nur wenig Wärmeenergie für die LNG-Verdampfung erforderlich ist, wird das 3-Wegeventil 30 geschlossen, um zu verhindern, dass warmes Wasser in den Kaltwasserkreislauf zurückgespeist wird.

Eine Feineinstellung der Ventile 25 und 30 erfolgt über eine Rückkoppelung der im Rücklauf an dem Temperatursensor 28 gemessenen Temperatur. Diese Korrekturgröße wird als überlagerter Integralanteil auf den Stellantrieb des jeweils geöffneten 3-Wegeventils überlagert.

### Bezugszeichenliste

- 1: LNG Tank
- 2: Antriebsmaschine
- 3: erster Wärmetauscher
- 4: zweiter Wärmetauscher
- 5: Klimaanlage
- 6: erster Zwischenkreislauf
- 7: dritter Wärmetauscher
- 8: zweiter Zwischenkreislauf
- 9: vierter Wärmetauscher
- 10: Kühlwasserkreislauf
- 11: Umwälzpumpe
- 12: Umwälzpumpe
- 13: fünfter Wärmetauscher
- 14: Kaltwasserkreislauf
- 15: Fluidleitung
- 16: Primärseite
- 17: Primärseite
- 18: Sekundärseite
- 19: Primärseite
- 20: Sekundärseite
- 21: Primärseite
- 22: Dampfheizeinrichtung
- 23: Sekundärseite
- 24: Sekundärseite
- 25: 3-Wegeventil
- 26: Regeleinrichtung
- 27: Durchflussmesser
- 28: Temperatursensor
- 29: Temperatursensor
- 30: 3-Wegeventil
- 31: Rücklaufstrecke
- 32: Förderpumpe
- 33: Förderpumpe
- 34: Motor-Wärmetauscher
- 35: Klimageräte
- 36: Kältemaschinen

## Patentansprüche

1. Verfahren zur Aufheizung von LNG-Flüssiggas zur Versorgung einer Antriebsmaschine (2) eines Seefahrzeugs mit Brennstoff, bei dem das Flüssiggas aus einem LNG-Tank (1) über einen ersten Wärmetauscher (3) geführt wird und über einen ersten Zwischenkreislauf (6) in thermischer Verbindung mit einem zweiten Wärmetauscher (4) steht, der mit einem Kaltwasserkreislauf (14) einer Klimaanlage (5) verbunden ist, aus dem wenigstens zeitweise thermische Energie aus wärmeabgebenden Einrichtungen des Seefahrzeuges über den zweiten Wärmetauscher (4), den ersten Zwischenkreislauf (6) und den ersten Wärmetauscher (3) an das aufzuheizende LNG übertragen wird, **dadurch gekennzeichnet, dass** das Flüssiggas zur weiteren Aufheizung ferner über einen dritten Wärmetauscher (7) geführt wird, der über einen zweiten Zwischenkreislauf (8) in thermischer Verbindung mit einem vierten Wärmetauscher (9) steht, der mit einem Kühlwasserkreislauf (10) der Antriebsmaschine (2) verbunden ist, aus dem wenigstens zeitweise thermische Energie über den vierten Wärmetauscher (9), den zweiten Zwischenkreislauf (8) und den dritten Wärmetauscher (7) an das aufzuheizende LNG übertragen wird.

2. Verfahren nach A1, **dadurch gekennzeichnet, dass** der erste und/oder der zweite Zwischenkreislauf (6, 8) eine Glykol/Wasser-Mischung enthalten, welche jeweils über eine Umwälzpumpe (11, 12) im Kreislauf geführt wird.

3. Verfahren nach A1, **dadurch gekennzeichnet, dass** wenigstens zeitweise thermische Energie über einen fünften Wärmetauscher (13) zwischen Kühlwasserkreislauf (10) der Antriebsmaschine (2) und Kaltwasserkreislauf (14) der Klimaanlage (5) übertragen wird.

4. Verfahren nach A1, **dadurch gekennzeichnet, dass** in den Kühlwasserkreislauf (10) der Antriebsmaschine (2) ferner eine Dampfheizeinrichtung (22) eingeschaltet ist.

5. System zur Aufheizung von LNG-Flüssiggas zur Brennstoff-Versorgung einer mit einem Kühlwasserkreislauf (10) versehenen Antriebsmaschine (2) eines Seefahrzeuges, das eine mit einem Kaltwasserkreislauf (14) versehene Klimaanlage (5) enthält, wobei das System Folgendes umfasst:
- eine Fluidleitung (15) zur Übertragung von LNG-Flüssiggas aus einem LNG-Tank (1) an die Antriebsmaschine (2), wobei die Fluidleitung (15) nacheinander über die Primärseite (16) eines ersten (3) und die Primärseite (17) eines dritten (7) Wärmetauschers geführt ist,
- einen ersten Zwischenkreislauf (6), in dem eine Wärmeträgerflüssigkeit im Umlauf zwischen der Sekundärseite (18) des ersten (3) und der Primärseite (19) eines zweiten Wärmetauschers (4) geführt ist,
- einen zweiten Zwischenkreislauf (8), in dem eine Wärmeträgerflüssigkeit im Umlauf zwischen der Sekundärseite (20) des dritten (7) und der Primärseite (21) eines vierten Wärmetauschers (9) geführt ist,
- wobei über die Sekundärseite (23) des zweiten Wärmetauschers (4) der Kaltwasserkreislauf (14) der Klimaanlage (5) geführt ist und über die Sekundärseite (24) des vierten Wärmetauschers (9) der Kühlwasserkreislauf (10) der Antriebsmaschine (2) geführt ist.

6. System nach A 5, **dadurch gekennzeichnet, dass** der erste (6) und der zweite (8) Zwischenkreislauf jeweils eine Umwälzpumpe (11, 12) enthalten.

7. System nach A5, **dadurch gekennzeichnet, dass** der Kühlwasserkreislauf (10) der Antriebsmaschine (2) über einen Dampfheizer (22) geführt ist.

8. System nach A5, **dadurch gekennzeichnet, dass** der Kühlwasserkreislauf (10) der Antriebsmaschine (2) und der Kaltwasserkreislauf (14) der Klimaanlage (5) über einen fünften Wärmetauscher (13) wenigstens zeitweise in thermischer Verbindung stehen.

9. System nach A8, **dadurch gekennzeichnet, dass** der Kaltwasserkreislauf (14) der Klimaanlage (5) mittels einer Kältemaschine (36) abkühlbar ist.

10. System nach A8, **dadurch gekennzeichnet, dass** der Kaltwasserkreislauf (14) der Klimaanlage (5) ein Regelventil zur Steuerung der Wärmezufuhr für die LNG-Aufheizung enthält.

11. System nach einem der A 5 - 9, **dadurch gekennzeichnet, dass** eine Regeleinrichtung (26) vorgesehen ist, die einen Durchflussmesser (27) zur Erfassung des jeweiligen Brennstoffbedarfs an der Antriebsmaschine (2) und Temperatursensoren (20, 29) zur Erfassung der Temperatur des Kaltwasserkreislaufs enthält und dass die Regeleinrichtung (26) ein Stellsignal an ein 3-Wegeventil (25) zur Steuerung des Flüssigkeitsstroms des Kaltwasserkreislaufs über den fünften Wärmetauscher (13) abgibt.

12. System nach A 11, **dadurch gekennzeichnet, dass** die Regeleinrichtung (26) mit einem 3-Wegeventil (30) zur Steuerung einer Rücklaufstrecke (31) zwischen Zu- und Ablauf der Klimaanlage (5) verbunden ist.

13. System nach A 11 und A12. **dadurch gekennzeichnet, dass** aus den von den Temperatursensoren (28, 29) im Zu- und Ablauf der Klimaanlage erfassten Temperaturen Korrekturparameter zur Einstellung der 3-Wegeventile (25, 30) ermittelt werden.
